# EUROPEAN PATENT SPECIFICATION

(11) **EP 0 858 738 B1**
(45) Date of publication and mention of the grant of the patent: **09.01.2002**
(21) Application number: 98301165.1
(22) Date of filing: 17.02.1998
(51) Int. Cl.: A21C 3/06

(54) **Method and apparatus for winding up a sheet of dough**
Verfahren und Vorrichtung zum Aufrollen eines Teigblattes
Procédé et appareil pour enrouler les morceaux de pâtes

(30) Priority: 18.02.1997 JP 5105597
(43) Date of publication of application: 19.08.1998
(73) Proprietor: RHEON AUTOMATIC MACHINERY CO., LTD., Utsunomiya-shi Tochigi-ken (JP)
(72) Inventor: Okaizumi, H., c/o Rheon Autom. Machinery Co. Ltd., Utsunomiya-shi, Tochigi-ken (JP); Kuroo, N., c/o Rheon Autom. Machinery Co. Ltd., Utsunomiya-shi, Tochigi-ken (JP); Niibe, Takao, c/o Rheon Autom. Machinery Co. Ltd., Utsunomiya-shi, Tochigi-ken (JP)
(74) Representative: Leale, Robin George

(56) References cited:
- JP-A- 7 039 294
- JP-A- 7 298 827
- JP-A- 8 009 873
- US-A- 5 437 223

## Description

This invention relates to a method and apparatus for manufacturing various kinds of bar-shaped, rolled up products (having concentric sections) made of bread dough, pie dough, dough for Danish pastry, and the like.

A conventional apparatus for manufacturing rolled up products is disclosed in a publication entitled A Collection of Well-known Art, published February 20, 1980, by the Japanese Patent Office. This apparatus has a roller, called a sidewinder, to roll up a sheet of dough that is continuously fed, when the roller rotates. Also, in some cases this apparatus had some members that were able to assist the sidewinder to roll up the continuous sheet of dough.

A method and apparatus according to the preambles of claims 1 and 3 is known from US-A-5 437 223.

Under some conditions, the conventional apparatus could not tightly roll up a sheet of dough, when rolled up products were being prepared. For example, when granulated sugar, jam, cream, etc. was applied on one or both sides of a sheet of dough, the dough surface became slippery. The sheet of dough then slipped off the roller of the conventional apparatus when the roller was rolling up the sheet, so that the sheet was rolled too loosely.

Also, when solid or granular pieces, such as chestnuts, strawberries, pieces of pineapple or apple, or sugar-glazed adzuki beans, were laid on the upper surface of the sheet of dough or embedded in the sheet, these pieces prevented the sidewinder from tightly rolling up the sheet of dough.

Viewed from one aspect the present invention provides a method of rolling up a sheet of dough comprising rolling up the sheet from one of the edges thereof in the longitudinal direction, moving a pressing means forward to press the roll that is being wound up, then moving the pressing means backward away from the roll, and repeating such forward and backward movements.

Viewed from another aspect the invention provides apparatus for rolling up a sheet of dough to form a rolled up product, comprising a conveyor means to convey a sheet of dough, a rolling up means located above the said conveyor means to roll up the sheet of dough to form a roll, a pressing means located near to the rolling up means, and means for causing said pressing means to move towards the rolling up means so as to press a roll that is being rolled up, then to move away from the rolling up means, and to repeat such movements.

The pressing means preferably comprises a pressing plate. The pressing plate is preferably positioned opposite a roller of the rolling up means. The pressing plate of the pressing means preferably slopes down towards the conveying surface of the conveyor. The lower end of the pressing plate can be arranged to contact the lower side of the roll of dough being rolled up.

An embodiment of the invention will now be described by way of example and with reference to the accompanying drawings, in which:-
Fig. 1 is a plan view of an embodiment of this invention, showing a sheet of dough being rolled up;
Figs. 2, 3, and 4 are side views of a pressing plate of this embodiment of the invention, to explain its pressing function; and
Fig. 5 is another plan view of the same apparatus but showing a sheet of dough on which a filling is laid, being rolled up.

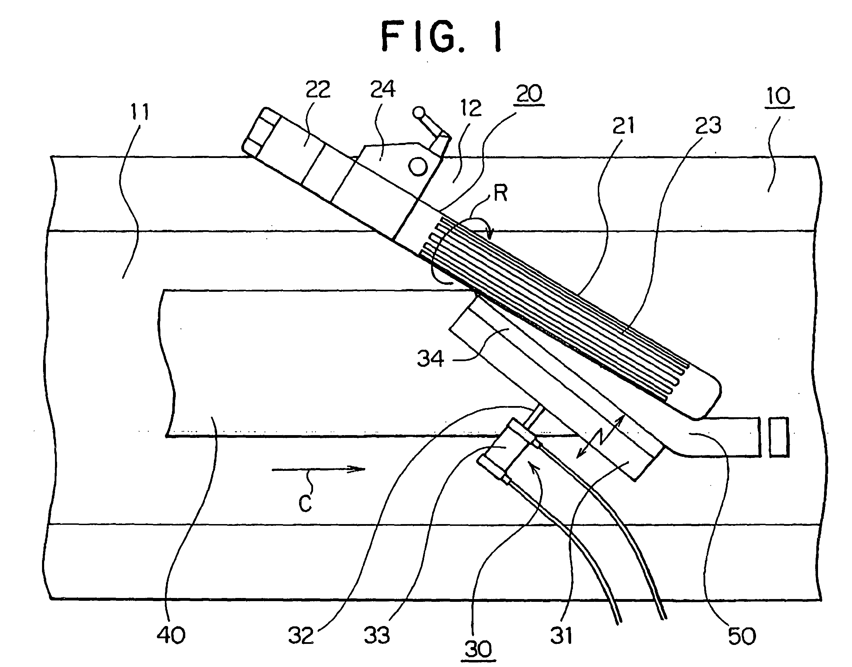

Fig. 1 shows an embodiment of an apparatus for rolling up a sheet of dough, according to this invention. It includes a conveyor 10, a rolling-up apparatus 20, and a pressing apparatus 30. The conveyor 10 includes a conveyor belt 11 and a frame 12, and operates to feed a sheet of dough 40 in the direction of the arrow C.

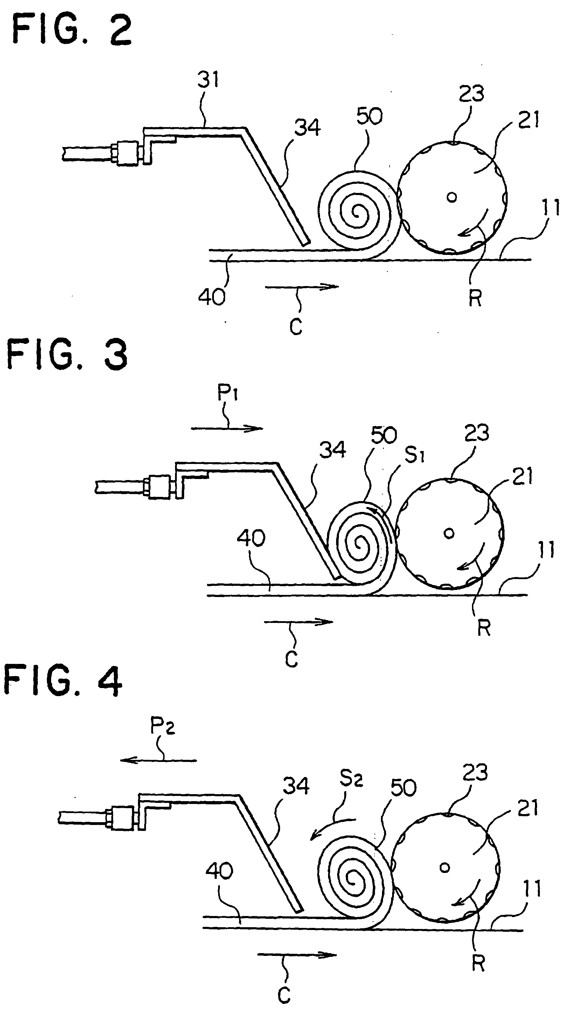

The rolling up apparatus 20 includes a roller 21. It is mounted to the frame 12 through a mounting arm 24 such that the roller 21 is obliquely positioned relative to the longitudinal direction of the conveyor belt 11. This angle of the roller can be changed. A motor 22 is connected to the roller 21 to drive it. The frame 12 also supports the motor 22. On the surface of the roller 21 recesses 23 are formed in the longitudinal direction, to engage a sheet of dough when it is being rolled up. The roller 21 does not contact the conveyor belt 11, being horizontally supported parallel to the conveyor belt 11 to maintain a gap between the roller and the conveyor belt. The sheet of dough 40 cannot pass through the gap. The roller 21 rotates opposite to the advancing direction of the conveyor belt 11 (Fig. 2).

The pressing apparatus 30 includes a pressing plate 31 and a motor 33, connected to each other by an arm 32. The pressing plate 31 is horizontally supported and includes a pressing part 34, which slopes down towards the surface of the conveyor belt 11 (see Figs. 2 to 4). The lower end of the pressing part 34 is supported near the upper surface of the dough that is being fed by the conveyor belt 11, but does not contact it.

The pressing plate 31 has a horizontal length that is substantially the same as that of the part of the roller 21 that contacts the sheet of dough. The pressing part 34 is located opposite the side surface of the roller 21. The motor 33 drives the pressing plate 31 to reciprocate it horizontally. Thus, the pressing plate 31 alternately approaches and moves away from the roller 21, in repeating fashion. The motor 33 is an electric motor, but it could be an air motor or some other type.

In operation, the sheet of dough 40 is stretched by a stretcher (not shown) and is then fed by the conveyor belt 11 in the direction of the arrow C in Fig. 1. As shown in Figs. 1 to 4, the roller 21 rotates in the direction of the arrow R. The roller rolls up one end of the sheet of dough 40, when the end abuts against the roller, to form a roll 50. As the sheet is wound up, the diameter of the roll increases. The roll can have a diameter of 80 mm or more.

As the roller 21 is rolling up the sheet of dough 40, the pressing plate 31 approaches the roller 21, as seen in Fig. 3, so that the pressing part 34 contacts the roll 50. Since the pressing part 34 slopes down towards the surface of the conveyor belt 11, the lower part of the pressing part 34 contacts the lower side of the roll 50. The pressing part 34 continues to advance, to push the roll 50 towards the roller 21. Simultaneously, the roll 50 is rotated by the roller in the direction of the arrow S₁, as shown in Fig. 3. As a result, the roll 50 is deformed between the roller 21 and the pressing plate 34, to a shape whose cross section is somewhat oval. Also, the area of the surface of roller 21 that contacts the roll 50 increases, so that the friction between them increases. This friction ensures that the roller 21 continues to roll up the sheet 40 around the roll 50 without any slippage.

Then, as the pressing part 34 moves away from the roll 50, the roll falls down on a flat part of the sheet 40, since the roll is deformed to an oval shape. That is, because the roll 50 is deformed so as to be elongated in the vertical direction, the roll is easily rotated in the direction of the arrow S₂, as seen in Fig. 4. As a result the sheet 40 can be more easily rolled up.

Then, the pressing plate 31 again approaches the roller 21 to press the roll 50, and then again moves away from it. This approach and retraction are repeated frequently as the roller is rolling up the sheet to prepare a rolled up product. Thus the pressing part 34 frequently presses the roll as it is being rolled up.

As stated above, the lower part of the pressing part 34 contacts and presses the lower side of the roll 50, since the pressing part 34 slopes down towards the conveying surface of the conveyor belt 11. Thus, the pressing part 34 does not prevent the roll 50 from being rotated in the direction of the arrow S₁ in Fig. 3. Rather, the roll can easily be rotated around its lower side, since the lower part of the pressing part 34 holds the lower side of it.

As the diameter of the roll 50 increases as it is rolled up, the contact area of the roller 21 with the surface of the roll increases. As a result, the friction between them increases, so that the roller 21 can tightly roll up the roll. Thus, even when the roll achieves a large diameter as it is being rolled up, it does not collapse.

The pressing part 34 of the pressing apparatus 30 need not be a plate. Instead, a pressing roller may be used. It must be parallel to the roller 21. Also, a plurality of pressing rollers may be used. They also must be parallel to the roller 21. Such a pressing roller or rollers would be arranged to repeatedly move towards and away from the roll that is being rolled up, so that the roll is repeatedly pressed when it is being rolled up.

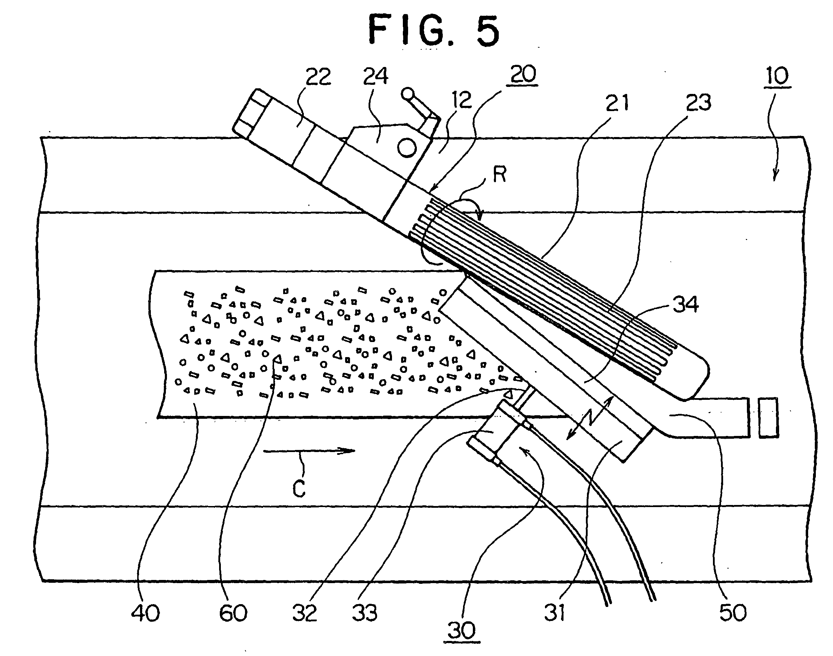

Fig. 5 shows the same apparatus being used for rolling up a sheet of dough 40 with a filling 60 laid on it. The filling 60 can be solid or granular pieces, such as chestnuts, strawberries, pieces of pineapples or apples, or sugar-glazed adzuki beans. The pieces can be laid on the upper surface of the sheet of dough 40, after it has been stretched by a stretcher (not shown), or embedded in the sheet before or after it is stretched. This apparatus rolls up such a sheet to produce a rolled up product. The conventional apparatus causes the roller to slip relatively to a sheet of dough being rolled up. However, this apparatus allows the pressing plate to press the roll of dough so that the friction between the roll and the roller increases. As a result, the sheet can be tightly rolled up.

## Claims

1. A method of rolling up a sheet of dough (40) comprising rolling up the sheet from one of the edges thereof in the longitudinal direction, the method being **characterised by** the step of moving a pressing means (34) forward to press the roll (50) that is being wound up, then moving the pressing means backward away from the roll, and repeating such forward and backward movements.

2. A method as claimed in claim 1, further including a step of laying a filling (60) on the sheet of dough before it is rolled up.

3. Apparatus for rolling up a sheet of dough (40) to form a rolled up product, comprising a conveyor means (10) to convey a sheet of dough, a rolling up means (20) located above the said conveyor means to roll up the sheet of dough to form a roll and a pressing means (34) located near to the rolling up means, the apparatus being **characterised by** means for causing said pressing means to move towards the rolling up means so as to press a roll that is being rolled up, then to move away from the rolling up means, and to repeat such movements.

4. Apparatus as claimed in claim 3, wherein the said pressing means includes a pressing plate (34).

5. Apparatus as claimed in claim 4, wherein the said pressing plate (34) is positioned opposite a roller (21) of the said rolling up means.

6. Apparatus as claimed in claim 4 or 5, wherein the said pressing plate (34) slopes down towards the conveying surface of the conveyor means (10).

7. Apparatus as claimed in any of claims 4 to 6, wherein the lower end of the said pressing plate (34) contacts the lower side of a roller (21) of the said rolling up means.

## Patentansprüche

1. Verfahren zum Aufrollen einer Teigplatte (oder "Teigschicht", "Teigbahn" oder "Teigblatt") (40), aufweisend das Aufrollen der Platte von einer ihrer Kanten her in Längsrichtung, wobei das Verfahren **gekennzeichnet ist durch** die Schritte des Bewegens einer Drückvorrichtung (34) nach vorne zum Drücken der Rolle (50), die gerade aufgewickelt wird, des anschließenden Bewegens der Drückvorrichtung nach hinten weg von der Rolle und des Wiederholens dieser Vorwärts- und Rückwärtsbewegungen.

2. Verfahren nach Anspruch 1, des Weiteren aufweisend einen Schritt des Legens einer Füllung (60) auf die Teigplatte, bevor sie aufgerollt wird.

3. Einrichtung zum Aufrollen einer Teigplatte (40) zum Bilden eines aufgerollten Produkts, aufweisend eine Fördervorrichtung (10) zum Fördern einer Teigplatte, eine Aufrollvorrichtung (20), die sich oberhalb der Fördervorrichtung befindet, zum Aufrollen der Teigplatte zum Bilden einer Rolle, und eine Drückvorrichtung (34), die sich nahe der Aufrollvorrichtung befindet, wobei die Einrichtung **gekennzeichnet ist durch** eine Vorrichtung zum Veranlassen, dass sich die Drückvorrichtung auf die Aufrollvorrichtung zu bewegt, um eine Rolle zu drücken, die gerade aufgerollt wird, und dass sie sich anschließend von der Aufrollvorrichtung weg bewegt und diese Bewegungen wiederholt.

4. Einrichtung nach Anspruch 3, wobei die Drückeinrichtung eine Drückplatte (34) aufweist.

5. Einrichtung nach Anspruch 4, wobei die Drückplatte (34) gegenüber einer Walze (21) der Aufrollvorrichtung angeordnet ist.

6. Einrichtung nach Anspruch 4 oder 5, wobei die Drückplatte (34) zur Förderoberfläche der Fördervorrichtung (10) hin schräg abfällt.

7. Einrichtung nach einem der Ansprüche 4 bis 6, wobei das untere Ende der Drückplatte (34) die untere Seite einer Walze (21) der Aufrollvorrichtung berührt.

## Revendications

1. Procédé pour enrouler une feuille de pâte (40) comprenant l'enroulement de la feuille depuis un de ses bords dans la direction longitudinale, le procédé étant **caractérisé par** la phase de déplacement d'un moyen de pression (34) vers l'avant pour presser le rouleau (50) qui est en train d'être enroulé, puis de déplacement du moyen de pression vers l'arrière, l'écartant du rouleau, et de répétition desdits mouvements avant et arrière.

2. Procédé selon la revendication 1, comprenant également une phase d'étalement d'un fourrage (60) sur la feuille de pâte avant qu'elle soit enroulée.

3. Appareil pour enrouler une feuille de pâte (40) afin de former un produit roulé, comprenant un moyen transporteur (10) pour transporter une feuille de pâte, un moyen d'enroulement (20) situé au-dessus dudit moyen transporteur pour enrouler la feuille de pâte afin de former un rouleau et un moyen de pression (34) situé près du moyen d'enroulement, l'appareil étant **caractérisé par** un moyen pour amener ledit moyen de pression à se déplacer vers le moyen d'enroulement de manière à presser un rouleau qui est en train d'être enroulé, puis pour éloigner ledit moyen de pression du moyen d'enroulement, et pour répéter lesdits mouvements.

4. Appareil selon la revendication 3, dans lequel ledit moyen de pression comprend une plaque de pression (34).

5. Appareil selon la revendication 4, dans lequel ladite plaque de pression (34) est positionnée en face d'un cylindre (21) dudit moyen d'enroulement.

6. Appareil selon la revendication 4 ou 5, dans lequel ladite plaque de pression (34) est inclinée vers le bas en direction de la surface de transport du moyen transporteur (10).

7. Appareil selon l'une quelconque des revendications 4 à 6, dans lequel l'extrémité inférieure de ladite plaque de pression (34) entre en contact avec la face inférieure d'un rouleau (21) dudit moyen d'enroulement.
